# FASCICULE DE BREVET EUROPEEN

(11) **EP 0 670 561 B1**
(45) Date de publication et mention de la délivrance du brevet: **27.12.1996**
(21) Numéro de dépôt: 95400455.2
(22) Date de dépôt: 02.03.1995
(51) Int. Cl.: G07F 7/12, G06K 19/073, G07F 7/10

(54) **Procédé de fonctionnement d'une carte à puce**
Betriebsverfahren einer Chipkarte
Operating method of an IC-card

(30) Priorité: 04.03.1994 FR 9402529
(43) Date de publication de la demande: 06.09.1995
(73) Titulaire: GEMPLUS CARD INTERNATIONAL, F-13420 Gemenos (FR)
(72) Inventeur: Geronimi, François, F-75116 Paris (FR); Gordons, Edouard, F-75116 Paris (FR)
(74) Mandataire: Ballot, Paul Denis Jacques

(56) Documents cités:
- EP-A- 0 361 491
- EP-A- 0 437 386
- FR-A- 2 638 002

## Description

L'invention concerne les cartes à microcircuit plus généralement connues sous le nom de cartes à puces.

Les cartes à puces actuelles deviennent de plus en plus sophistiquées et comportent maintenant souvent un microprocesseur, de sorte que la carte peut fonctionner sous la commande de programmes d'instructions incorporés à la carte.

Les programmes d'instructions comportent d'une part les programmes généraux d'un système d'exploitation et d'autre part des programmes d'application. Le système d'exploitation définit essentiellement le fonctionnement interne de la carte et les protocoles de communication avec l'extérieur. Les programmes d'application utilisent les possibilités du système d'exploitation pour faire exécuter à la carte des tâches qui dépendent de l'application envisagée : par exemple une application de transaction monétaire utilisera des programmes d'application mis au point par une banque; une autre banque pourra établir des programmes d'application différents utilisant les mêmes cartes et le même système d'exploitation. Un distributeur de services (téléphone, etc.) pourra mettre au point ses propres programmes d'application, utilisant toujours le même système d'exploitation.

Le cycle de vie d'une carte à puce se décompose en général en grandes étapes qui sont :
- 1. la fabrication et la prépersonnalisation
- 2. la personnalisation
- 3. l'utilisation.

A chacune de ces étapes, la carte a un propriétaire différent et des fonctionnalités différentes. Le propriétaire à l'étape 1 est en général le fabricant de la carte, à l'étape 2 un prestataire de service, et à l'étape 3 l'utilisateur final des services du prestataire.

Lors de la fabrication, le fabricant effectue une prépersonnalisation qui consiste à inscrire dans la carte des données qui sont spécifiques de son client qui est le prestataire de services.

Puis, le prestataire reçoit la carte et y inscrit des programmes d'application et des données de personnalisation de son client qui est l'utilisateur final.

Enfin, l'utilisateur final utilise la carte pour obtenir les services pour laquelle elle a été définie et programmée.

Les étapes 1 et 2 sont celles qui servent au fabricant et au prestataire de service à définir une configuration opérationnelle de la carte. Pour réaliser cette configuration, le fabricant et le prestataire utilisent des commandes puissantes d'écriture et lecture en mémoire, commandes auxquelles l'utilisateur final n'aura absolument pas accès. Et le fabricant peut utiliser des commandes plus puissantes que le prestataire de services.

Par exemple, par commande plus puissante, on entend le fait que le fabricant a accès en lecture et écriture absolument à toutes les zones de mémoire non volatile de la carte. Le prestataire de service n'aura pas accès à certaines zones telles que celles qui identifient de manière unique le prestataire pour les besoins duquel la carte sera fabriquée; il n'aura pas accès non plus à des zones de programmes que le fabricant considère comme confidentiels. Et l'utilisateur n'aura pas accès à certaines zones de programme et de données que le prestataire considère comme confidentiels ou à des zones qui servent à assurer la sécurité des transactions contre les fraudes.

Lors du passage d'une étape à une autre, le propriétaire à l'étape considérée met en oeuvre des mesures de passage à l'étape suivante, mesures qui en général comportent une interdiction irréversible de retour à l'étape précédente. Ces mesures peuvent par exemple comporter le claquage irréversible de fusibles physiques ou de fusibles logiques (cellules de mémoire non-volatiles programmables une seule fois), pour interdire l'accès à des zones de mémoire. Le fabricant peut claquer des fusibles, et le prestataire de services d'autres fusibles.

Un problème que l'on rencontre de plus en plus fréquemment est la complexité croissante des programmes embarqués dans les cartes à puces, et l'augmentation croissante des quantités de données stockées dans les mémoires des cartes.

Il est alors de plus en plus difficile de mettre au point les programmes d'application, de sorte que des dysfonctionnements inattendus peuvent se manifester malgré les vérifications très poussées effectuées lors de la mise au point de ces programmes. Le système d'exploitation lui-même est de plus en plus sophistiqué et n'est pas à l'abri de dysfonctionments inattendus.

Ces dysfonctionnements se manifestent lors de l'utilisation des cartes par les utilisateurs finaux, que ce soit dans un contexte d'utilisation anormale de la carte, ou même dans une utilisation normale.

Mais à l'étape de l'utilisation finale, on n'a plus accès à certaines zones de mémoire, dont l'examen serait pourtant indispensable pour détecter l'origine du problème et aider à sa solution. N'ayant que le symptôme du dysfonctionnement, vu par l'utilisateur qui ne peut plus utiliser sa carte normalement, il est très difficile de remonter à la cause pour y remédier. La cause peut être technologique ou logicielle.

Il en résulte pour le fabricant et éventuellement aussi pour le prestataire de service une perte d'informations précieuses pour la mise au point d'un produit donnant toute satisfaction.

Le document EP-A-0 437 386 décrit un procédé de fonctionnement d'une carte à puce selon le préambule de la revendication 1.

L'invention propose une solution pour améliorer la qualité des produits en facilitant la recherche des causes des dysfonctionnements constatés.

Selon l'invention, il est proposé un procédé de fonctionnement d'une carte à puce tel que défini dans la revendication indépendante 1.

La solution selon l'invention est la suivante : la carte possède un premier indicateur d'état définissant l'étape de cycle de vie dans laquelle se trouve la carte; un autre indicateur d'état définit le droit de revenir à l'étape précédente; une commande de retour à l'étape précédente permet de modifier l'état du premier indicateur; cette commande, qui est exécutable par le système d'exploitation de la carte, ne peut être utilisée que pour un état déterminé du deuxième indicateur. Le changement d'état du deuxième indicateur interdit définitivement l'utilisation de la commande de retour. Une utilisation incorrecte de la commande de retour place le deuxième indicateur dans un état qui interdit définitivement l'utilisation de la commande. La commande de retour possède à cet effet des paramètres qui doivent répondre à certains critères (vérifiés par le système d'exploitation de la carte) pour que la commande soit considérée comme correcte.

De préférence, les paramètres de la commande font intervenir le résultat d'un algorithme de chiffrement faisant intervenir des données secrètes et/ou publiques. Ces paramètres sont calculés par le lecteur de carte pour émettre la commande correcte. La commande est reçue par la carte qui vérifie les paramètres envoyés et interdit l'utilisation (et toute utilisation future) de la commande de retour s'il y a divergence entre les paramètres reçus et les paramètres calculés.

Ainsi, la carte subit un cycle de vie dans lequel on a introduit une étape supplémentaire qu'on peut appeler étape de qualification, entre l'étape de personnalisation et l'étape d'utilisation, dans laquelle la carte peut être utilisée mais dans laquelle on conserve temporairement la possibilité d'expertiser des données confidentielles de la carte en cas de problème. Cette possibilité est maîtrisée grâce à l'utilisation de codes secrets et d'algorithmes de chiffrement, de sorte qu'elle n'est pas accessible à l'utilisateur final et qu'elle est plutôt réservée au fabricant (éventuellement au prestataire de service).

Le premier état de la carte est de préférence un état de fabrication ou personnalisation; le deuxième état est de préférence l'état d'utilisation (le propriétaire de la carte est l'utilisateur final), mais peut être aussi l'état de personnalisation (le propriétaire est un prestataire de services utilisables par les titulaires de cartes).

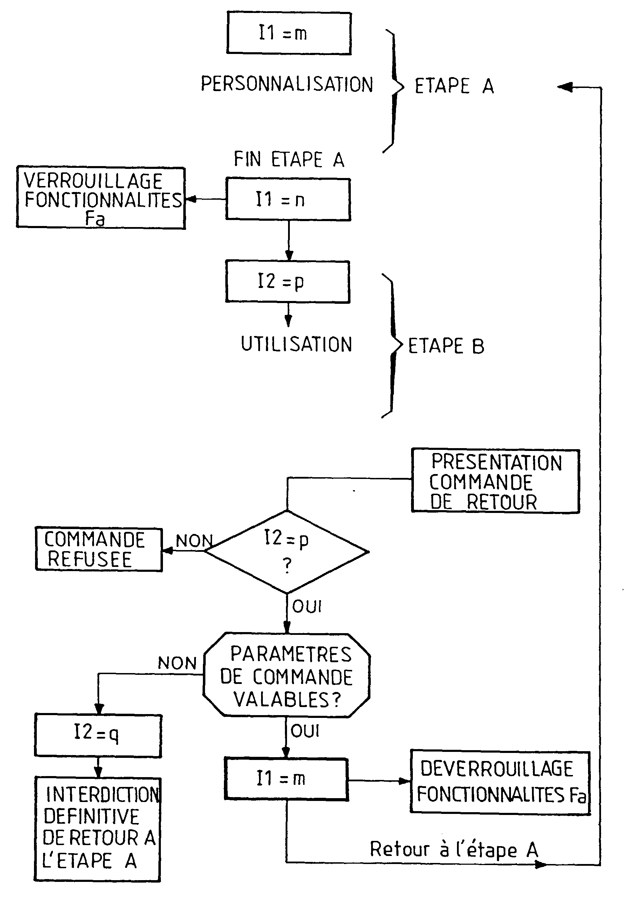

D'autres caractéristiques et avantages de l'invention apparaîtront à la lecture de la description détaillée qui suit et qui est faite en référence au dessin annexé dans lequel la figure unique représente un organigramme général du procédé selon l'invention.

On suppose dans cet exemple d'application du procédé selon l'invention que la carte est initialement dans un premier état (état A) correspondant par exemple au cycle de personnalisation (le prestataire de service est le propriétaire et maîtrise entre autres certaines fonctionnalités spécifiques de l'étape A et désignées par Fa, notamment des fonctions d'accès à certaines zones de mémoire de la carte).

Dans ce premier état de la carte, un premier indicateur d'état I1 a une première valeur m. Pour cette valeur m, les fonctionnalités spécifiques Fa sont disponibles; elles sont en effet contrôlées par l'état de l'indicateur I1. L'indicateur I1 peut être constitué par un ensemble de cellules de mémoire constituant un mot d'un ou plusieurs octets par exemple. On notera que la valeur de l'indicateur peut définir de nombreux autres états de la carte si on le désire.

On désire passer à l'étape suivante (deuxième état B de la carte) qui est l'utilisation de la carte par un utilisateur qui devient propriétaire de la carte dans cet état. L'utilisateur est ici celui qui peut bénéficier, à l'aide de sa carte, des biens ou services offerts par le prestataire. Dans ce deuxième état B, les fonctionnalités Fa ne doivent pas être accessibles à l'utilisateur. Elles sont condamnées, et l'indicateur d'état I1 sert à la fois à indiquer et à contrôler cette condamnation.

Le prestataire de service lance l'exécution d'une instruction de changement d'état qui se résume pour l'essentiel aux fonctions suivantes :
- le premier indicateur d'état I1 est mis à une deuxième valeur n représentant l'état B;
- pour cette deuxième valeur n, les fonctionnalités Fa deviennent indisponibles, l'indicateur I1 contrôlant directement ou indirectement l'accès à ces fonctionnalités (par des circuits physiques ou des interdictions logicielles faisant partie du système d'exploitation de la carte et mettant en oeuvre un examen de l'état de l'indicateur I1).
- un deuxième indicateur d'état I2 est parallèlement mis à une première valeur p; cette première valeur p indique et contrôle la possibilité de remettre le premier indicateur à sa première valeur; la valeur p peut être la valeur n (indicateurs redondants, l'un servant à contrôler l'autre).

La carte est alors fournie à l'utilisateur, avec uniquement les possibilités qui lui sont permises, c'est-à-dire sans accès aux fonctionnalités Fa qu'on veut lui interdire.

Cependant, une possibilité de retrouver ces fonctionnalités existe, mais cette possibilité n'est pas offerte à l'utilisateur. Elle ne peut être mise en oeuvre que par le prestataire de service, voire même seulement par le fabricant.

Si la carte fonctionne normalement pour l'utilisateur, cette possibilité de retour n'est en principe jamais mise en oeuvre.

Mais si la carte présente des défauts de fonctionnement, elle peut alors être rapportée au prestataire de service qui va essayer d'analyser les défauts en examinant des zones de mémoire dont la lecture ne devrait plus être possible dans l'état B de la carte.

Pour cela, le prestataire de service va utiliser une commande de retour à l'état A. La commande est une instruction émise à partir d'un lecteur de carte, et elle est exécutée à l'intérieur de la carte. Dans le cas général, l'invention est en effet destinée à être mise en oeuvre pour des cartes à microprocesseur capables d'exécuter des instructions reçues (sous contrôle du système d'exploitation de la carte).

Cette commande présente une confidentialité d'utilisation. Il n'est pas souhaitable en effet que l'utilisateur de la carte puisse la mettre en oeuvre.

La commande peut donc faire intervenir un algorithme de cryptage, ou un code secret. Par exemple, la commande est constituée par un code instruction suivi de paramètres et n'est exécutée par le système d'exploitation de la carte que si les paramètres correspondent à ceux qui sont attendus.

Les paramètres envoyés peuvent être le résultat d'un calcul faisant intervenir le numéro de série de la carte (pouvant être lu par le lecteur). Ainsi le contenu de la commande de retour n'est pas fixe mais varie en fonction de la carte utilisée, ce qui améliore la sécurité. Le calcul peut être une fonction de cryptage à clé publique ou secrète.

Le système d'exploitation de la carte vérifie la commande en utilisant la même fonction de calcul que le lecteur de cartes qui prépare et envoie la commande de retour. Si la vérification conduit à une acceptation de la commande et si le deuxième indicateur est dans son premier état (I2 = p, autorisant le retour à l'étape A), la commande de retour est exécutée. Sinon, le deuxième indicateur I2 est immédiatement mis (par le système d'exploitation de la carte) dans un deuxième état I2 = q d'où il ne peut plus sortir et où il interdit définitivement toute commande de retour à l'état A.

Si la commande de retour est exécutée par la carte, le premier indicateur I1 est remis dans son premier état I1 = m, et les fonctions Fa disponibles dans cet état sont à nouveau rendues accessibles. Le prestataire de service peut alors procéder à l'investigation des causes de dysfonctionnement de la carte en examinant des zones de mémoire susceptibles d'aider à cette investigation.

La carte peut être remise à nouveau dans son deuxième état B et donnée à l'utilisateur. Le deuxième indicateur I2 sera mis dans son premier état I2 = p si on désire toujours garder la possibilité de retour à l'état A; sinon il sera mis dans son deuxième état I2 = q pour interdire définitivement le retour à l'état A. Pour mettre le deuxième indicateur dans son deuxième état, il suffit de présenter à la carte une commande de retour avec un paramètre erronné; la commande de retour ne sera pas exécutée et le deuxième indicateur sera définitivement verrouillé à I2 = q, les fonctions Fa étant définitivement verrouillées.

On peut envisager que ce procédé serve pendant une phase de qualification de la carte en expérimentation réelle : par exemple, une application envisagée sur une échelle nationale peut être mise en service à titre expérimental dans une ville. Toutes les cartes sont alors pourvues d'un système d'exploitation avec possibilité de commande de retour à des fonctionnalités initiales. Les cartes sont alors examinées pendant cette phase de qualification, notamment chaque fois qu'un dysfonctionnement apparaît. Les programmes de l'application sont modifiés jusqu'à corriger petit à petit tous les dysfonctionnements possibles. A la fin de l'expérimentation dans la ville, l'application définitivement au point peut être étendue au pays entier. Cette fois, le prestataire de service distribue aux utilisateurs des cartes qui ont leur commande de verrouillage définitivement bloquée (le prestataire pouvant facilement présenter systématiquement une mauvaise commande de retour avant de distribuer ses cartes à des utilisateurs).

Bien entendu, on peut prévoir que les changements d'état de la carte avec possibilité de retour sont exécutés successivement sans perdre le bénéfice des commandes de retour autorisées. Ainsi, si la carte passe du premier état A dans le deuxième état B avec autorisation de retour, puis du deuxième état dans un troisième état C avec encore autorisation de commande de retour sans annulation de la première commande de retour, alors il est possible de revenir du troisième état vers le deuxième puis du deuxième vers le premier. On a ainsi une sorte de transitivité des commandes de retour successives.

## Revendications

1. Procédé de fonctionnement d'une carte à puce, comportant deux indicateurs d'état (I1, I2) internes pour définir deux états (A et B) de celle-ci, dans lequel:
- le premier indicateur (I1) est changé d'une première valeur (m) à une seconde valeur (n) lors du passage de la carte d'un premier état (A) à un deuxième état (B);
- pour cette seconde valeur (n), le premier indicateur (I1) interdit certaines fonctionnalités (Fa) de la carte qui étaient autorisées pour le premier état de la carte;
- le deuxième indicateur d'état (I2) est parallèlement mis à une première valeur (p) où il autorise le retour du premier indicateur (I1) à sa première valeur (m), ou à une seconde valeur (q) où il interdit ce retour;
- le premier indicateur peut être remis, sous contrôle du deuxième indicateur (I2), à sa première valeur (m) où il autorise à nouveau lesdites fonctionnalités;
- le premier indicateur (I1) est remis à sa première valeur (m) sous la commande d'une instruction de retour appliquée à la carte, sous réserve que le deuxième indicateur (I2) n'ait pas sa deuxième valeur (q);
caractérisé en ce que
- l'envoi d'une instruction de retour erronée place le deuxième indicateur (I2) à sa deuxième valeur (q) qui interdit le retour du premier indicateur à sa première valeur.

2. Procédé de fonctionnement selon la revendication 1, caractérisé en ce que le premier état de la carte est un état dans lequel la carte possède des fonctionnalités réservées au fabricant de la carte, et le deuxième état est un état dans lequel la carte possède des fonctionnalités autorisées pour un prestataire de service.

3. Procédé selon la revendication 1, caractérisé en ce que le premier état est un état dans lequel la carte possède des fonctionnalités (Fa) réservées à un prestataire de service et le deuxième état est un état pour lequel la carte peut être distribuée à un utilisateur des services du prestataire, cet utilisateur ne pouvant accéder à ces fonctionnalités.

## Patentansprüche

1. Betriebsverfahren für eine Chipkarte mit zwei internen Zustandsanzeigern (I1, I2) zum Definieren von zwei Zuständen (A und B) der Chipkarte, bei dem:
- der erste Anzeiger (I1) von einem ersten Wert (m) auf einen zweiten Wert (n) geändert wird, wenn die Karte von einem ersten Zustand (A) in einen zweiten Zustand (B) übergeht;
- beim zweiten Wert (n) der erste Anzeiger (I1) bestimmte Funktionen (Fa) der Karte sperrt, die im ersten Zustand der Karte zugelassen waren;
- der zweite Zustandsanzeiger (I2) parallel auf einen ersten Wert (p), bei dem er die Rückkehr des ersten Anzeigers (I1) zu seinem ersten Wert (m) zuläßt, oder auf einen zweiten Wert (q) gesetzt wird, bei dem er diese Rückkehr sperrt;
- der erste Anzeiger unter Kontrolle des zweiten Anzeigers (I2) auf seinen ersten Wert (m) zurückgesetzt werden kann, in dem er die Funktionen wieder zuläßt;
- der erste Anzeiger (I1) auf einen der Karte eingegebenen Rückkehrbefehl hin auf seinen ersten Wert (m) zurückgesetzt wird, sofern nicht der zweite Anzeiger (I2) seinen zweiten Wert (q) hat;
**dadurch gekennzeichnet**, daß
- das Absenden eines irrtümlichen Rückkehrbefehls den zweiten Anzeiger (I2) auf seinen zweiten Wert (q) setzt, der die Rückkehr des ersten Anzeigers zu seinem ersten Wert sperrt.

2. Betriebsverfahren nach Anspruch 1, dadurch gekennzeichnet, daß der erste Zustand der Karte ein Zustand ist, in dem die Karte Funktionen besitzt, die dem Hersteller der Karte vorbehalten sind, und der zweite Zustand ein Zustand ist, in dem die Karte Funktionen besitzt, die für einen Diensteanbieter zugelassen sind.

3. Verfahren nach Anspruch 1, dadurch gekennzeichnet, daß der erste Zustand ein Zustand ist, in dem die Karte Funktionen (Fa) besitzt, die einem Diensteanbieter vorbehalten sind und der zweite Zustand ein Zustand ist, in dem die Karte an einen Nutzer der Dienste des Anbieters vertrieben werden kann und dieser Nutzer keinen Zugriff auf diese Funktionen hat.

## Claims

1. Operating method for a chip card having two internal status indicators (I1, I2) to define two states (A and B) thereof in which:
- the first indicator (I1) switches from a first value (m) to a second value (n) when the card is switched from a first state (A) to a second state (B):
- for this second value (n), the first indicator (I1) prevents certain functions (Fa) of the card which were authorised for the first status of the card;
- in parallel, the second status indicator (I2) is set at a first value (p), in which it authorises the return of the first indicator (I1) to its first value (m), or at a second value (q) preventing this return:
- the first indicator can be reset, under the control of the second indicator (I2), to its first value (m), in which case it re-authorises the said functions;
- the first indicator (I1) is set to its first value (m) by dint of a command issuing a return instruction applied to the card, provided that the second indicator (I2) is not indicating its second value (q) ;
characterised in that
- if a return instruction is sent in error, the second indicator (I2) is switched to its second value (q), which prevents the first indicator from returning to its first value.

2. Operating method as claimed in claim 1, characterised in that the first status of the card is a status in which the card has functions reserved for the card manufacturer and the second status is a status in which the card has authorised functions for a service provider.

3. Method as claimed in claim 1, characterised in that the first status is a status in which the card has functions (Fa) reserved for a service provider and the second status is a status which can be used if the card is distributed to a user of the services offered by the provider, this user having no access to these functions.
